# EUROPEAN PATENT SPECIFICATION

(11) **EP 4 245 104 B1**
(45) Date of publication and mention of the grant of the patent: **29.01.2025**
(21) Application number: 22162511.4
(22) Date of filing: 16.03.2022
(51) Int. Cl.: A01B 29/04

(54) **APPARATUS FOR PACKING SOIL AND METHOD OF MANUFACTURE OF THE APPARATUS**
VORRICHTUNG ZUM VERDICHTEN VON BODEN UND VERFAHREN ZUR HERSTELLUNG DER VORRICHTUNG
APPAREIL POUR COMPACTER LE SOL ET PROCÉDÉ DE FABRICATION DE L'APPAREIL

(43) Date of publication of application: 20.09.2023
(73) Proprietor: Kverneland Group Operations Norway AS, 4353 Klepp Stasjon (NO)
(72) Inventor: Sigmundstad, Stian, 4340 Bryne (NO); Werner, Dag Arne, 4013 Stavanger (NO)
(74) Representative: Håmsø Patentbyrå AS

(56) References cited:
- EP-A1- 0 856 242
- DE-A1- 2 439 595
- DE-A1- 2 533 625
- DE-U1- 29 623 857
- FR-A1- 2 281 706
- GB-A- 2 569 393

## Description

### FIELD

The present invention relates to a packer ring which is mountable on a packer e.g. for cultivators or a packer for ploughs for breaking down and consolidating a particulate substrate, such as a packer for a used for breaking down and consolidating soil for cultivation. More specifically, the invention relates to the construction of a packer ring and the method of manufacture of the packer ring.

### BACKGROUND

Packers typically comprise one or more packer rings used for crumbling, breaking down and consolidating ploughed soil prior to delivery of seed. After a plough has passed over the soil, it is beneficial to pack the soil such that the soil will accept water more effectively by improved capillary action. Furthermore, in dry conditions, moisture is retained better if the soil has been packed.

In some conditions, consolidation of the soil can be sufficiently achieved by use of a basic roller which may be pulled beside a plough for example. Rollers typically have a larger dead weight than packer rings. The roller may be additionally weighted with water for example, the additional weight helping to break up clods in the soil and to consolidate the surface to produce a bed for subsequent delivery of seed thereto. The roller may flatten the surface an unintended amount, thereby causing drainage problems. Packer rings on the other hand are typically lighter in weight and if weight is to be applied to the ground/soil, the packer rings can take a temporary weight transfer from the plough to pack the soil.

To achieve better consolidation of the soil, one or more rows of packer or press rings are typically preferred. The rows of rings are pulled over the soil in straight lines, resulting in a good consolidation of the soil and slicing of soil clods remaining after ploughing.

Typically, a frame is pulled behind a piece of farm machinery, such as a tractor, and the frame comprises at least one axle upon which the packer rings are commonly mounted spaced relative to each other. The frame may also comprise other equipment for performing other operations on the soil as is well known in the art.

In some cases each packer ring in the row of packer rings may be interspaced with a tubular sleeve like member which is also configured to interact with the soil to provide some consolidatory effects to the soil. International Patent Application WO2004/047515A1 discloses such an arrangement.

In some cases the shape of the packer rings has been adapted in attempts to improve their performance. For example, in German patent application DE3402064A1 a plurality of tines is provided to form the packer ring.

Forming the packer rings of individual tines or prongs may provide some advantages. However, the packer rings are subjected to large mechanical loads and often exposed to extreme weather conditions in some regions of the world, therefore excessively complicated arrangements can provide a plurality of weak points in the packer rings which is susceptible to breakage, leading to increased servicing and replacement.

Many prior art soil packer rings comprise a wedge shaped disc formed of two sheet metal rings welded together. Often there is a void between the rings where soil, dirt and water can enter and accumulate. The gathering of such material inside the rings adds weight to the rings and can erode the rings from the inside, particularly at weak points such as at the weld joining the rings. The rings may rust in the void area, particularly since the rings will typically be stored outside in all weather conditions when not in use. It is expensive, time consuming and complicated to change or replace worn packer rings.

Agricultural equipment is typically heavy, and it is often desired to reduce the weight of some equipment, particularly if it is held distant from the vehicle pulling or suspending it. In this regard, it is often desired to reduce the weight of the packer rings, however they must remain sufficiently strong and hard wearing.

The invention has for its object to remedy or to reduce at least one of the drawbacks of the prior art, or at least provide a useful alternative to prior art.

The object is achieved through features, which are specified in the description below and in the claims that follow.

Patent document DE2439595A1 discloses a cylindrical roller hub with tines or spokes curved like shovels in a radial plane, so that the axis of the tine-tips is tangential to the hub axis. The tines are formed of two halves of metal plate and welded together to form a hollow inside. The tine ends form surfaces which slant in relation to the roller's radial plane. The tine-tips are pointed. The bridge-pieces joining the tines are preferably of flat steel and act as cutter-blades. The tines can be made of pipes instead of two plates.

Patent document FR2281706A1 discloses a cultivator wheel for use in agricultural machines. It has a hub and tines which project substantially radially from the hub and are provided with pointed outer end portions. These tines are bent out of the central radial plane of the wheel. Portions of the wheel are formed with cutting edges that are inclined circumferentially of the wheel as well as relative to the central radial plane of the same.

Patent document EP0856242A1 discloses a roller with several ring segments on a shaft with the rings having areas which are inclined alternately in opposite directions to the radial plane and to the circumferential direction. The rings have a round or flat cross-section. There are preferably bends between the straight areas of the ring. Imaginary extensions of the bends cut the axis of the ring segments at an angle other than 90 degrees. The imaginary extensions of adjoining bends run in opposite directions.

Patent document DE2533625A1 discloses an implement capable of breaking the clods resulting from ploughing and working down these clods, mixing the tilth and compressing it and producing a fine seed bed at the surface. The hub is hexagonal, from which six points radiate, skewed as in wheel spokes. Blades between the points are welded so that they form points. The whole unit is welded together and forms a rigid structure. The points are alternately above and below the central plane of the implement and are typically triangular in form.

Patent document GB2569393A discloses a press assembly for an agricultural implement comprising an axle, a plurality of identical tools on the axle and a plurality of spacers each positioned on the axle between respective pairs of adjacent tools. The tools are rollers, press rings or packer wheels. The axle comprises a metal tube with non-circular cross-section. Each tool comprises a wall portion with a central aperture, each aperture being shaped to substantially match the non-circular cross-section of the tube in order to permit each tool to slide into position along the tube and to prevent rotation of each tool on the tube of the axle. Press assemblies of the invention may be particularly applicable for use as a dual press packer where two press assemblies may be arranged one in front of the other with their tools in the form of press rings interleaved.

Document DE29623857U1 discloses a farm roller with a shaft mounted in a frame, on which discs are fastened at a distance from one another, each of which on its outer circumference has an edge, characterized in that each disk has parallel side faces in the vicinity of the shaft and in the region of the alternating troughs has a radially outwardly decreasing width such that, viewed in cross section of the disk through the trough, a surface of the disk rising radially outwards at an angle to the edge of the disk in the trough.

### SUMMARY

The invention is defined by the independent patent claims. The dependent claims define advantageous embodiments of the invention.

According to a first aspect of the invention, there is provided a packer ring for mounting in a packer and performing work on soil, the packer ring comprising: a central hub for receiving an axle therethrough; a ring portion; and a connecting portion connecting the central hub to the ring portion; wherein the ring portion comprises first and second notches configured to engage the soil in use, characterised in that the ring portion comprises a vertical central plane, and the first notch protrudes outwardly from the vertical centre plane only on a first side of the ring portion and the second notch protrudes outwardly from the vertical central plane only on a second side of the ring portion; wherein the first and second notches and the connecting portion are integrally formed from a single piece of material.

The connecting portion may comprise a plurality of spokes connecting the central hub to the ring portion.

The first and second notches may be arranged in a staggered configuration on the ring portion, such that as the packer ring rotates in use, the first and second notches are delivered to the soil at different times.

The packer ring may further comprise a plurality of additional notches arranged in a staggered configuration on the ring portion such that alternate adjacent notches protrude from alternate sides of the ring portion and such that as the packer ring rotates in use, alternate adjacent notches are delivered to the soil at different times.

The notches may comprise a raised portion between a forward edge and a rearward edge. The notches may be configured to engage the soil at an angle of around 63 degrees relative to the horizontal. The notches may be configured to engage the soil at an angle of around 45 degrees relative to the horizontal.

According to a second aspect of the invention, there is provided a packer characterised in that the packer comprises a packer ring according to the first aspect of the invention and an axle, wherein the axle is located through the central hub.

The packer may further comprise a plurality of additional packer rings according to the first aspect of the invention, wherein the axle is located through the central hub of each of the plurality of additional packer rings.

According to a third aspect of the invention, there is provided a method of manufacturing a packer ring for mounting in a packer and performing work on soil; the method comprising the steps of: providing a sheet material; cutting a substantially circular shape from the sheet material; cutting a central aperture in the substantially circular shape and cutting at least two additional apertures to provide spokes connecting the central aperture to a ring portion, thereby forming a blank; heating the blank to a sufficient temperature such that the blank can be permanently deformed by a shaping tool; shaping the blank to form a packer ring by sandwiching the blank between two plates of the shaping tool and bringing the plates into engagement with the blank to form at least a first and a second notch on a ring portion of the blank, characterised in that the ring portion comprises a vertical central plane, and the first notch protrudes outwardly from the vertical central plane only on a first side of the ring portion and the second notch protrudes outwardly from the vertical central plane only on a second side of the ring portion.

The method may further comprise a step of hardening the packer ring by flowing a cooling liquid over the packer ring directly after shaping.

The step of shaping may further comprise bringing the plates into engagement with the blank to form rib extrusions on the spokes.

The step of cutting a substantially circular shape from the sheet material and/or the step of cutting a central aperture in the substantially circular shape may be performed by laser cutting the sheet material.

The blank may be heated to between 800 and 1,000 degrees Celsius. The blank may be heated to around 900 degrees Celsius.

The method may further comprise a step of abrasive blasting the packer ring. The abrasive blasting may be sandblasting.

The method may further comprise a step of attaching a hub into the central aperture. The attachment of the hub may be performed by welding.

### BRIEF DESCRIPTION OF THE DRAWINGS

Embodiments of the invention will now be described with reference to the following drawings, in which:
Figure 1 shows a prior art packer ring;
Figure 2 shows a simplified schematic of a packer ring;
Figure 3 shows a detailed view of the packer ring of Figure 2;
Figure 4 shows an isometric view of the packer ring shown in Figure 2;
Figure 5 shows an alternative view of the packer ring shown in Figure 2;
Figure 6 shows a cross-sectional view through a portion of the packer ring shown in Figure 2;
Figure 7 shows another isometric view of the packer ring shown in Figure 2;
Figure 8 shows the packer ring of Figure 2 complete with a central hub;
Figure 9 shows a cross-sectional view through the packer ring shown in Figure 8;
Figure 10 shows an isometric view of the packer ring shown in Figure 8;
Figure 11 shows a sheet material; and
Figure 12 shows the sheet material of Figure 11 after a cutting process.

For clarity reasons, some elements may in some of the figures be without reference numerals. A person skilled in the art will understand that the figures are just principal drawings. The relative proportions of individual elements may also be distorted.

### DETAILED DESCRIPTION OF THE DRAWINGS

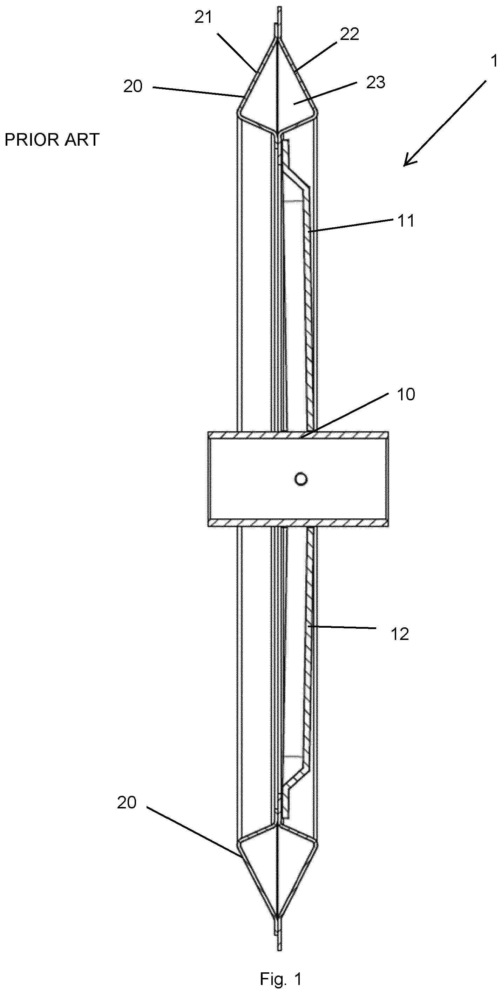

Figure 1 shows a prior art packer ring 1. The packer ring 1 comprises multiple components which are welded together. The packer ring 1 comprises a plurality of spokes 11, 12 which connect a central aperture 10 to a ring portion 20. Typically, each of the spokes 11, 12 is welded to the ring portion 20. The ring portion 20 has a wedge shaped profile which is formed of first 21 and second 22 bulb portions welded together. A void 23 is formed between the first 21 and second 22 bulb portions and water, soil and/or dirt may collect within the void 23 in use. The process of manufacturing a packer ring 1 shown in Figure 1 may be temperamental and may be liable to produce many wasted parts due to inaccurate welding or breakages during assembly. Additionally, the packer ring 1 may be weak and break easily in use, leading to increased maintenance costs and likelihood of interruptions in service using the packer ring 1.

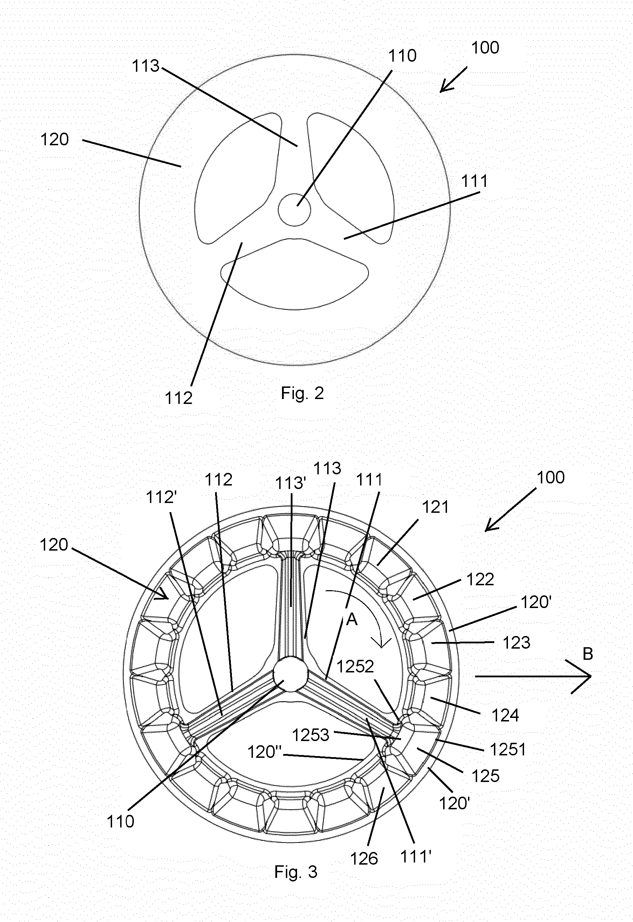

Figure 2 shows a simplified schematic of a packer ring 100. The packer ring is circular in shape and comprises a central aperture 110 with first, second and third spokes 111, 112, 113 connecting the central aperture 110 to a ring portion 120. The packer ring 100 is shown firstly without a central hub for clarity purposes.

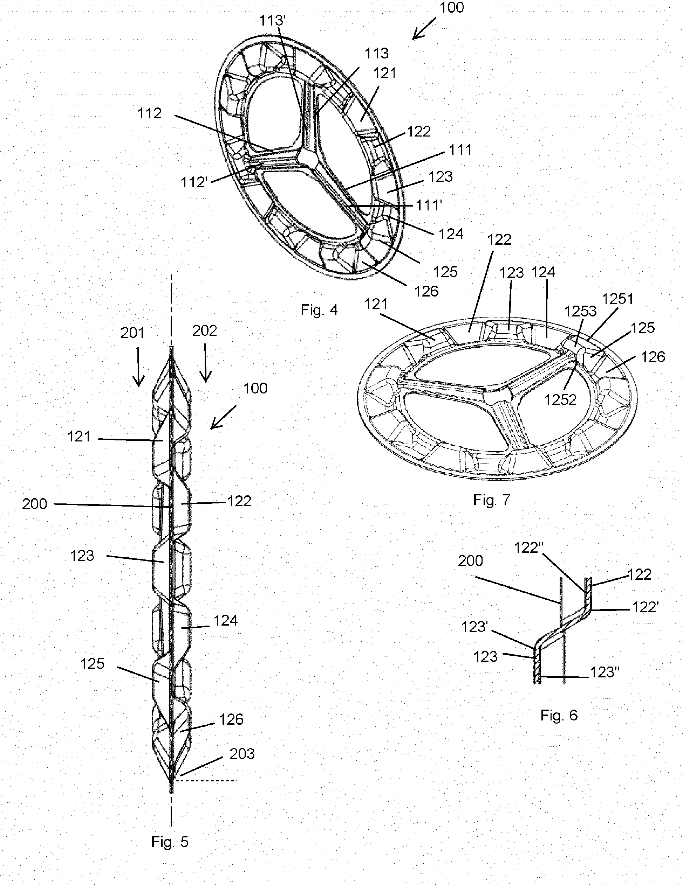

Figures 3 and 4 show further details of the packer ring 100 shown in Figure 2. It can be seen in Figures 3 and 4 that the ring portion 120 comprises a continuous series of notches 121, 122, 123, 124, 125, 126 around the entire ring portion 120. In some examples the series of notches 121, 122, 123, 124, 125, 126 may not be continuous and there may be substantially flat connecting portions or other surface features between adjacent notches 121, 122, 123, 124, 125, 126. Furthermore, it can be seen in Figures 3 and 4 that in the presently described example the ring portion 120 comprises a leading edge 120'. That is to say, the notches 121, 122, 123, 124, 125, 126 are offset from the circumference of the ring portion 120 towards the central aperture 110. The purpose of this leading edge 120' will be explained later. Still referring to Figures 3 and 4, it can be seen that the spokes 111, 112, 113 each comprise ribbed extrusions 111', 112', 113' which are provided to strengthen the spokes 111, 112, 113.

It will be understood that the packer ring 100 is configured to be mounted on an axle. Typically, the packer ring 100 may be mounted on an axle with a plurality of other packer rings 100 in a row. In some examples, there may be multiple rows of packer rings 100. It will be understood that the central aperture 110 provides a mounting point for receiving an axle (not shown). In this connection, when the packer ring 100 is mounted vertically on a horizontal axle the packer ring 100 may be viewed down a vertical central plane 200 shown in Figure 5. Alternate notches 121, 122, 123, 124, 125, 126 protrude from alternate sides of the central plane 200. That is to say, the first, third, and fifth notches 121, 123, 125 shown in Figure 5 protrude to a first side 201 of the central plane 200 and the second, fourth and sixth notches 122, 124, 126 shown in Figure 5 protrude to a second side 202 of the central plane 200.

It will be understood that as the central axle (not shown) progresses forward, being pulled by the plough, tractor, or another piece of agricultural machinery, the first, third and fifth notches 121, 123, 125 will penetrate the soil to the first side 201 of the central plane 200 and the second, fourth and sixth notches 122, 124, 126 will penetrate the soil to the second side 202 of the central plane 200, as the packer ring 100 rotates as it travels across the soil.

Referring now to Figure 6 which shows a cross-sectional cut through the second and third notches 122, 123, it can be seen that each notch 122, 123 is formed of a shell structure to create a convex external surface 122', 123' and a concave internal surface 122", 123".

Referring again to Figure 3, the interaction of the packer ring 100 with the soil in use is now explained in greater detail. As the packer ring 100 rotates in the direction indicated by arrow A, and travels forward in the direction of arrow B, the notches 121, 122, 123, 124, 125, 126 work the soil to provide agitation, packing, trenching or other work to the soil. In the main, it is the external convex surfaces (122', 123' in Figure 6) which provide the desired work to the soil. It will be appreciated that the particular form of the notches 121, 122, 123, 124, 125, 126 may be adapted in some examples, where the packer ring 100 is to be used in a particular type of soil and/or a particular climate and/or for a particular purpose such as to improve irrigation or drainage. Just one type of exemplary notch form is shown in the presently described example in the interest of clarity and brevity.

Referring now to the fifth notch 125 shown most clearly in Figures 3 and 7, it can be seen that each notch comprises a forward edge 1251 and a rearward edge 1252, with a raised portion 1253 disposed between the forward edge 1251 and the rearward edge 1252. As the packer ring 100 progresses such that the fifth notch 125 is moved into the soil (not shown), the leading edge 120' of the ring portion 120 first engages the soil, thereby splitting the soil such that a portion will be engaged by the fifth notch 125 on the first side 201 (Figure 5). As the ring portion 120 progresses deeper into the soil, the soil will move over the ring portion 120 from the leading edge 120' to an inside edge 120". The fifth notch 125 is shaped such that the soil is pushed as the raised portion 1253 progresses through the soil. In the presently described example the soil is pushed downwardly and outwardly from the central plane 200. However, in other examples where the notches 121, 122, 123, 124, 125, 126 may be shaped differently, the soil may be pushed in a different direction to achieve a different effect.

Referring again to Figure 5 it can be seen that in the presently described example the raised portions 1253 of the notches 121, 122, 123, 124, 125, 126 are configured such that the notches 121, 122, 123, 124, 125, 126 are presented to the soil at an angle 203 as the packer ring 100 rotates and progresses forwards through the soil. In the presently described example, the angle 203 between the each notch 121, 122, 123, 124, 125, 126 and the soil when that notch is brought into engagement with the soil is 63 degrees relative to the horizontal. In other examples, the angle 203 may be between 60 degrees and 65 degrees relative to the horizontal. In other examples, the angle 203 may be between 40 degrees and 65 degrees. In other examples, the angle 203 may be around 45 degrees.

Between the raised portion 1253 and the rearward edge 1252 of the notch 125 and between the rearward edge 1252 and the inside edge 120" of the ring portion 120 there is provided a continuous material, thereby eliminating the collection of soil, water and/or dirt in crevices or voids within the ring portion 120. Again it will be understood that the cross-sectional profile of the notches 121, 122, 123, 124, 125, 126 may be altered in other examples. As non-limiting examples only, a steeper or shallower inclination between the forward edge 1251 and the raised portion 1253 may be provided in some examples, and/or the raised portion 1253 may be brought closer to the forward edge 1251 than in the presently described example.

As explained above, when the leading edge 120' of the ring portion 120 engages the soil, the soil is split such that some soil is engaged by a notch 121, 123, 125 on the first side 201 of the packer ring 100 and some soil is engaged by a notch 122, 124, 126 on the second side 202 of the packer ring 100. In this connection, the concave internal surface 122", 123" (shown in Figure 6) may receive some soil. However, the concave internal surfaces 122", 123" allow any gathered soil to be ejected out of the notches 121, 122, 123, 124, 125, 126 as the packer ring 100 rotates. The raised portion 1253 provides movement of the soil on the first side 201 of the packer ring 100, and also, due to the shell construction, provides the concave internal surfaces 122", 123" with similarly angled surfaces as the convex external surfaces 122', 123'. In this connection, any soil built up in the concave internal surfaces 122", 123" may easily slide out rather than accumulate and become on the concave internal surfaces 122", 123". The centrifugal force applied to soil at the concave internal surfaces 122", 123" of a notch 121, 122, 123, 124, 125, 126 may typically be enough to eject the soil from the concave internal surfaces 122", 123". However, at the end of a packing operation, any stuck soil, dirt or mud remaining in the concave internal surfaces 122", 123" may be easily removed by jet wash or other known cleaning methods. In this connection, although some soil, mud or dirt may still gather in the packer ring 100 as described above, the soil will be in an area where it is easy to access and clean, as opposed to being trapped in an inaccessible area. Furthermore, it is likely that if the gathered soil, mud or dirt in the concave internal surfaces 122", 123" is left without being jet washed or otherwise removed, it will typically be removed naturally by exposure of the concave internal surfaces 122", 123" to the surrounding environment and weather. Therefore, even if not cleaned immediately, the soil, mud or dirt is not likely to remain in the packer ring 100 for a prolonger period of time, and hence degradation of the packer ring 100 by corrosion is mitigated.

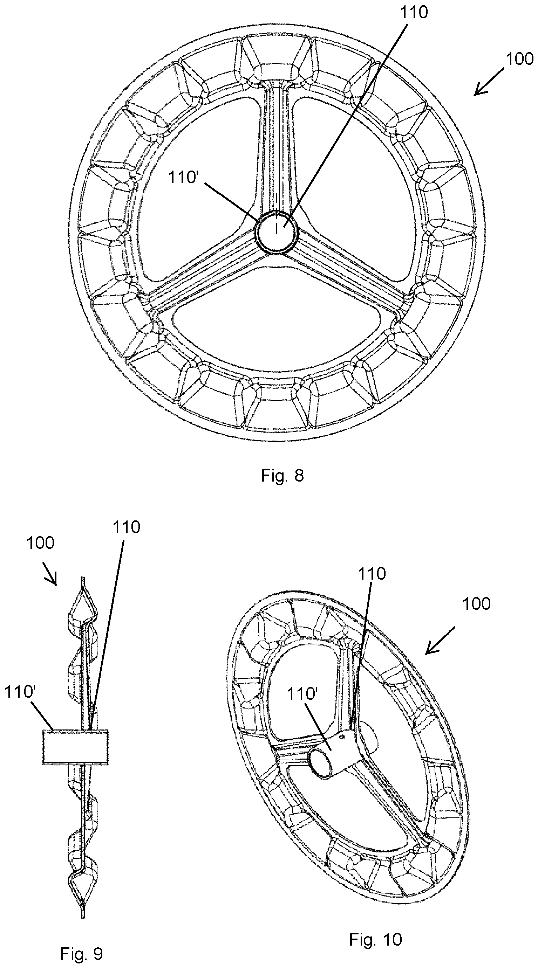

Referring now to Figures 8, 9 and 10, it can be seen that the packer ring 100 further comprises a hub 110' located in the central aperture 110 of the packer ring 100, which was omitted from Figures 2 to 7 for clarity purposes. In this connection, the hub 110' provides an interface for receiving the axle (not shown) upon which the packer ring 100 rotates. The hub 110' may be made of the same material as the rest of the packer ring 100, or may be made of a softer material, such that the hub 110' is sacrificially worn as the packer ring 100 rotates on the axle. This may provide a wearable part which can be removed and replaced with ease and at lesser expense than replacing the axle or the entire packer ring 100. Regardless of the material and if the hub 110' is configured to be a sacrificial component, the hub 110' provides a tubular connection such that the relatively narrow packer ring 100 can be securely and stably mounted on the axle for rotation.

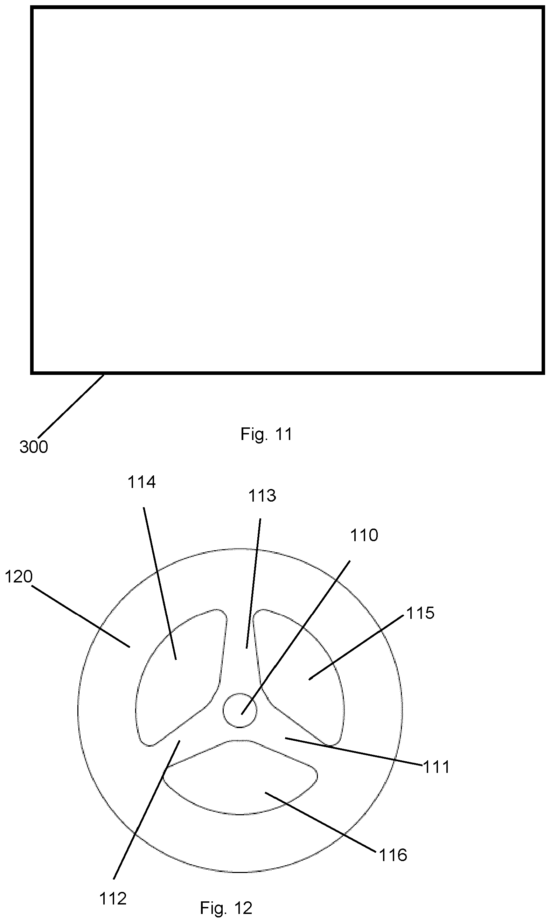

A process of manufacturing the packer ring 100 shown in Figures 8 to 10 is now described with reference to Figures 11 and 12. Firstly, a sheet material 300 is provided as shown in Figure 11. The sheet material 300 may be aluminium, steel, alloy or any other suitable material. The sheet material 300 is then cut into a circle to form the ring portion 120. Additionally, the central aperture 110 and first, second and third additional apertures 114, 115, 116 are cut thereby forming the first, second and third spokes 111, 112, 113 as shown in Figure 12. In the presently described example the sheet material 300 is cut by a laser. In other examples, other means of cutting the sheet material 300 may be used.

The process continues by shaping and hardening the notches 121, 122, 123, 124, 125, 126 on the ring portion 120 and the ribbed extrusions 111', 112', 113' on the spokes 111, 112, 113. Firstly, the cut sheet material shown in Figure 12 is placed in a shaping and hardening tool (not shown). The shaping and hardening tool comprises first and second plates and is configured such that the cut sheet material can be placed between the plates and then the plates can be brought towards each other to sandwich the cut sheet material between the plates.

To allow the cut sheet material to deform to form the notches 121, 122, 123, 124, 125, 126 and ribbed extrusions 111', 112', 113', the cut sheet material is firstly heated to around 900 degrees Celsius. In other examples the cut sheet material may firstly be heated to between 800 and 1,000 degrees Celsius. In other examples the cut sheet material may be heated to a suitable temperature such that the shaping and hardening tool can plastically deform the cut sheet material.

The first and second plates each comprise protrusions configured to form the notches 121, 122, 123, 124, 125, 126 and ribbed extrusions 111', 112', 113' in the cut sheet material. Furthermore, the shaping and hardening tool comprises a cooling means configured to provide a cooling liquid to the packer ring 100 directly after the notches 121, 122, 123, 124, 125, 126 and ribbed extrusions 111', 112', 113' have been formed. In the presently described example, a flow of water is provided to rapidly cool the packer ring 100. The provision of a cooling liquid flowing over the packer ring 100 provides hardening of the packer ring 100. The packer ring 100 is then subject to abrasive blasting to provide a desired surface finish and/or remove surface contaminants. In the presently described example, the packer ring 100 is sandblasted. It will be understood by a person skilled in the art that a variety of abrasive materials may be used instead of sand in other examples. The hub 110' is then welded into the aperture 110 using any known welding technique. The packer ring 100 is then optionally cleaned and optionally painted in some examples. The packer ring 100 is then ready for mounting on an axle (not shown).

Although in the example shown there are three spokes, in other examples four spokes or any other number of spokes may be provided.

Regarding materials, hardened low-alloy carbon steels typically described in ISO 683-1 and ISO 683-2 are preferred. However, it will be understood that the material used may be selected from a myriad of suitable materials.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A packer ring (100) for mounting in a packer and performing work on soil, the packer ring (100) comprising:
a central hub (110') for receiving an axle therethrough;
a ring portion (120); and
a connecting portion (111, 112, 113) connecting the central hub (110') to
the ring portion (120);
wherein the ring portion (120) comprises first (121) and second (122) notches configured to engage the soil in use,
**characterised in that** the ring portion (120) comprises a vertical central plane (200), and the first notch (121) protrudes outwardly from the vertical central plane (200) only on a first side (201) of the ring portion (120) and the second notch (122) protrudes outwardly from the vertical central plane (200) only on a second side (202) of the ring portion (120);
wherein the first (121) and second (122) notches and the connecting portion (111, 112, 113) are integrally formed from a single piece of material.

2. The packer ring (100) according to claim 1, wherein the connecting portion (111, 112, 113) comprises a plurality of spokes (111, 112, 113) connecting the central hub (110') to the ring portion (120).

3. The packer ring (100) according to claim 1 or 2, wherein the first (121) and second (122) notches are arranged in a staggered configuration on the ring portion (120), such that as the packer ring (100) rotates in use, the first (121) and second (122) notches are delivered to the soil at different times.

4. The packer ring (100) according to any preceding claim, further comprising a plurality of additional notches (123, 124, 125, 126) arranged in a staggered configuration on the ring portion (120) such that alternate adjacent notches (121, 122, 123, 124, 125, 126) protrude from alternate sides of the ring portion (120) and such that as the packer ring (100) rotates in use, alternate adjacent notches (121, 122, 123, 124, 125, 126) are delivered to the soil at different times.

5. A packer **characterised in that** the packer comprises a packer ring (100) according to any of claims 1 to 4 and an axle, wherein the axle is located through the central hub (110').

6. The packer according to claim 5, further comprising a plurality of additional packer rings (100) according to any of claims 1 to 4, wherein the axle is located through the central hub (100') of each of the plurality of additional packer rings (100).

7. A method of manufacturing a packer ring for mounting in a packer and performing work on soil; the method comprising the steps of:
a. providing a sheet material (300);
b. cutting a substantially circular shape from the sheet material (300);
c. cutting a central aperture (110) in the substantially circular shape and cutting at least two additional apertures (114, 115, 116) to provide spokes (111, 112, 113) connecting the central aperture (110) to a ring portion (120), thereby forming a blank;
d. heating the blank to a sufficient temperature such that the blank can be permanently deformed by a shaping tool;
e. shaping the blank to form a packer ring (100) by sandwiching the blank between two plates of the shaping tool and bringing the plates into engagement with the blank to form at least a first (121) and a second (122) notch on a ring portion (120) of the blank, **characterised in that** the ring portion (120) comprises a vertical central plane (200), and the first notch (121) protrudes outwardly from the vertical central plane (200) only on a first side (201) of the ring portion (120) and the second notch (122) protrudes outwardly from the vertical central plane (200) only on a second side (202) of the ring portion (120).

8. The method according to claim 7, further comprising a step of:
f. hardening the packer ring (100) by flowing a cooling liquid over the packer ring (100) directly after shaping in step e.

9. The method according to claim 7 or 8, wherein step e. further comprises:
bringing the plates into engagement with the blank to form rib extrusions (111', 112', 113') on the spokes (111, 112, 113).

10. The method according to any of claims 7 to 9, wherein step b and/or step c is performed by laser cutting the sheet material (300).

11. The method according to any of claims 7 to 10, wherein in step d the blank is heated to between 800 and 1,000 degrees Celsius.

12. The method according to any of claims 7 to 11, wherein in step d the blank is heated to around 900 degrees Celsius.

13. The method according to any of claims 7 to 12, further comprising a step of:
g. abrasive blasting the packer ring (100).

14. The method according to any of claims 7 to 13, further comprising a step of:
h. attaching a central hub (110') into the central aperture (110).

15. The method of claim 14, wherein the attachment of the central hub (110) is performed by welding.

## Patentansprüche

1. Packerring (100) zur Montage in einem Verpacker und zur Durchführung von Arbeiten am Boden, der Packerring (100) umfassend:
eine zentrale Nabe (110') zum Aufnehmen einer Achse durch diese hindurch;
einen Ringabschnitt (120); und
ein Verbindungsabschnitt (111, 112, 113), der die zentrale Nabe (110') mit
dem Ringabschnitt (120) verbindet;
wobei der Ringabschnitt (120) eine erste (121) und eine zweite (122) Kerbe umfasst, die so gestaltet sind, dass sie im Gebrauch in den Boden eingreifen,
**dadurch gekennzeichnet, dass** der Ringabschnitt (120) eine vertikale Mittelebene (200) umfasst und die erste Kerbe (121) nur auf einer ersten Seite (201) des Ringabschnitts (120) von der vertikalen Mittelebene (200) nach außen vorsteht und die zweite Kerbe (122) nur auf einer zweiten Seite (202) des Ringabschnitts (120) von der vertikalen Mittelebene (200) nach außen vorsteht;
wobei die erste (121) und die zweite (122) Kerbe und der Verbindungsabschnitt (111, 112, 113) einstückig aus einem einzigen Materialstück gebildet sind.

2. Packerring (100) nach Anspruch 1, wobei der Verbindungsabschnitt (111, 112, 113) eine Vielzahl von Speichen (111, 112, 113) umfasst, die die zentrale Nabe (110') mit dem Ringabschnitt (120) verbinden.

3. Packerring (100) nach Anspruch 1 oder 2, wobei die erste (121) und die zweite (122) Kerbe in einer versetzten Konfiguration auf dem Ringabschnitt (120) angeordnet sind, so dass, da der Packerring (100) sich im Einsatz dreht, die erste (121) und die zweite (122) Kerbe zu unterschiedlichen Zeiten in den Boden eingebracht werden.

4. Packerring (100) nach einem der vorstehenden Ansprüche, weiter umfassend eine Vielzahl zusätzlicher Kerben (123, 124, 125, 126), die auf dem Ringabschnitt (120) versetzt angeordnet sind, so dass abwechselnd benachbarte Kerben (121, 122, 123, 124, 125, 126) von abwechselnden Seiten des Ringabschnitts (120) vorstehen und so dass, wenn sich der Packerring (100) im Gebrauch dreht, abwechselnd benachbarte Kerben (121, 122, 123, 124, 125, 126) zu unterschiedlichen Zeiten in den Boden eingebracht werden.

5. Verpacker **dadurch gekennzeichnet, dass** der Verpacker einen Packerring (100) nach einem der Ansprüche 1 bis 4 und eine Achse umfasst, wobei die Achse durch die zentrale Nabe (110') hindurch angeordnet ist.

6. Verpacker nach Anspruch 5, weiter umfassend eine Vielzahl von zusätzlichen Packerringen (100) nach einem der Ansprüche 1 bis 4, wobei die Achse durch die zentrale Nabe (100') jedes der Vielzahl von zusätzlichen Packerringen (100) angeordnet ist.

7. Verfahren zum Herstellen eines Packerrings zur Montage in einem Verpacker und zum Durchführen von Arbeiten am Boden, das Verfahren umfassend die Schritte von:
a. Bereitstellen eines Bahnmaterials (300);
b. Schneiden einer im Wesentlichen kreisförmigen Form aus dem Bahnmaterial (300);
c. Schneiden einer zentralen Öffnung (110) in der im Wesentlichen kreisförmigen Form und Schneiden von mindestens zwei zusätzlichen Öffnungen (114, 115, 116), um Speichen (111, 112, 113) bereitzustellen, die die zentrale Öffnung (110) mit einem Ringabschnitt (120) verbinden, wodurch ein Rohling gebildet wird;
d. Erhitzen des Rohlings auf eine ausreichende Temperatur, so dass der Rohling durch ein Formgebungswerkzeug dauerhaft verformt werden kann;
e. Formen des Rohlings zum Bilden eines Packerrings (100) durch sandwichartiges Anordnen des Rohlings zwischen zwei Platten des Formwerkzeugs und In-Eingriff-Bringen der Platten mit dem Rohling, um mindestens eine erste (121) und eine zweite (122) Kerbe an einem Ringabschnitt (120) des Rohlings zu bilden, **dadurch gekennzeichnet, dass** der Ringabschnitt (120) eine vertikale Mittelebene (200) umfasst und die erste Kerbe (121) nur auf einer ersten Seite (201) des Ringabschnitts (120) von der vertikalen Mittelebene (200) nach außen vorsteht und die zweite Kerbe (122) nur auf einer zweiten Seite (202) des Ringabschnitts (120) von der vertikalen Mittelebene (200) nach außen vorsteht.

8. Verfahren nach Anspruch 7, weiter umfassend einen Schritt des:
f. Härtens des Packerrings (100) durch Überströmen des Packerrings (100) mit einer Kühlflüssigkeit unmittelbar nach der Formgebung in Schritt e.

9. Verfahren nach Anspruch 7 oder 8, wobei Schritt e. weiter umfasst:
in Eingriff bringen der Platten mit dem Rohling, um Rippenprofile (111', 112', 113') an den Speichen (111, 112, 113) zu bilden.

10. Verfahren nach einem der Ansprüche 7 bis 9, wobei Schritt b und/oder c durch Laserschneiden des Bahnmaterials (300) durchgeführt wird.

11. Verfahren nach einem der Ansprüche 7 bis 10, wobei in Schritt d der Rohling auf 800 bis 1.000 Grad Celsius erhitzt wird.

12. Verfahren nach einem der Ansprüche 7 bis 11, wobei in Schritt d der Rohling auf etwa 900 Grad Celsius erhitzt wird.

13. Verfahren nach einem der Ansprüche 7 bis 12, weiter umfassend einen Schritt des:
g. abrasiven Strahlens des Packerrings (100).

14. Verfahren nach einem der Ansprüche 7 bis 13, weiter umfassend einen Schritt des:
h. Anbringens einer zentralen Nabe (110') in der zentralen Öffnung (110).

15. Verfahren nach Anspruch 14, wobei die Befestigung der zentralen Nabe (110) durch Schweißen erfolgt.

## Revendications

1. Anneau (100) de cultitasseur destiné à être monté dans un cultitasseur et à réaliser un travail sur un sol, l'anneau (100) de cultitasseur comprenant :
un moyeu central (110') destiné à recevoir un essieu à travers celui-ci ;
une partie annulaire (120) ; et
une partie de liaison (111, 112, 113) reliant le moyeu central (110') à la partie annulaire (120) ;
dans lequel la partie annulaire (120) comprend des première (121) et seconde (122) encoches configurées pour venir en prise avec le sol lors de l'utilisation,
**caractérisé en ce que** la partie annulaire (120) comprend un plan central vertical (200), et la première (121) encoche fait saillie vers l'extérieur depuis le plan central vertical (200) uniquement sur un premier côté (201) de la partie annulaire (120) et la seconde (122) encoche fait saillie vers l'extérieur depuis le plan central vertical (200) uniquement sur un second côté (202) de la partie annulaire (120) ;
dans lequel les première (121) et seconde (122) encoches et la partie de liaison (111, 112, 113) sont formées d'un seul tenant à partir d'une seule pièce de matériau.

2. Anneau (100) de cultitasseur selon la revendication 1, dans lequel la partie de liaison (111, 112, 113) comprend une pluralité de rayons (111, 112, 113) reliant le moyeu central (110') à la partie annulaire (120).

3. Anneau (100) de cultitasseur selon la revendication 1 ou revendication 2, dans lequel les première (121) et seconde (122) encoches sont agencées en quinconce sur la partie annulaire (120), de telle sorte que lorsque l'anneau (100) de cultitasseur tourne lors de l'utilisation, les première (121) et seconde (122) encoches sont appliquées au sol à différents moments.

4. Anneau (100) de cultitasseur selon une quelconque revendication précédente, comprenant en outre une pluralité d'encoches supplémentaires (123, 124, 125, 126) disposées en quinconce sur la partie annulaire (120) de telle sorte que des encoches adjacentes alternées (121, 122, 123, 124, 125, 126) font saillie depuis les côtés alternés de la partie annulaire (120) et de telle sorte que lorsque l'anneau (100) de cultitasseur tourne lors de l'utilisation, des encoches adjacentes alternées (121, 122, 123, 124, 125, 126) sont appliquées au sol à différents moments.

5. Cultitasseur **caractérisé en ce que** le cultitasseur comprend un anneau (100) de cultitasseur selon l'une quelconque des revendications 1 à 4 et un essieu, dans lequel l'essieu est situé à travers le moyeu central (110').

6. Cultitasseur selon la revendication 5, comprenant en outre une pluralité d'anneaux (100) de cultitasseur supplémentaires selon l'une quelconque des revendications 1 à 4, dans lequel l'essieu est situé à travers le moyeu central (100') de chacun de la pluralité d'anneaux (100) de cultitasseur supplémentaires.

7. Procédé de fabrication d'un anneau de cultitasseur destiné à être monté dans un cultitasseur et à réaliser un travail sur un sol ; le procédé comprenant les étapes consistant de :
a. fourniture d'un matériau en feuille (300) ;
b. découpe d'une forme sensiblement circulaire à partir du matériau en feuille (300) ;
c. découpe d'une ouverture centrale (110) dans la forme sensiblement circulaire et découpe d'au moins deux ouvertures supplémentaires (114, 115, 116) pour fournir des rayons (111, 112, 113) reliant l'ouverture centrale (110) à une partie annulaire (120), formant ainsi une ébauche ;
d. chauffage de l'ébauche à une température suffisante de sorte que l'ébauche puisse être déformée de manière permanente par un outil de mise en forme ;
e. mise en forme de l'ébauche pour former un anneau (100) de cultitasseur en prenant en sandwich l'ébauche entre deux plaques de l'outil de mise en forme et en amenant les plaques en prise avec l'ébauche pour former au moins une première (121) et une seconde (122) encoche sur une partie annulaire (120) de l'ébauche,
**caractérisé en ce que** la partie annulaire (120) comprend un plan central vertical (200), et la première (121) encoche fait saillie vers l'extérieur depuis le plan central vertical (200) uniquement sur un premier côté (201) de la partie annulaire (120) et la seconde (122) encoche fait saillie vers l'extérieur depuis le plan central vertical (200) uniquement sur un second côté (202) de la partie annulaire (120).

8. Procédé selon la revendication 7, comprenant en outre une étape de :
f. durcissement de l'anneau (100) de cultitasseur par écoulement d'un liquide de refroidissement sur l'anneau (100) de cultitasseur directement après la mise en forme à l'étape e.

9. Procédé selon la revendication 7 ou revendication 8, dans lequel l'étape e comprend en outre :
la mise en prise des plaques avec l'ébauche pour former des extrusions de nervure (111', 112', 113') sur les rayons (111, 112, 113).

10. Procédé selon l'une quelconque des revendications 7 à 9, dans lequel l'étape b et/ou l'étape c est effectuée par découpe au laser du matériau en feuille (300).

11. Procédé selon l'une quelconque des revendications 7 à 10, dans lequel, à l'étape d, l'ébauche est chauffée à entre 800 et 1 000 degrés Celsius.

12. Procédé selon l'une quelconque des revendications 7 à 11, dans lequel, à l'étape d, l'ébauche est chauffée à environ 900 degrés Celsius.

13. Procédé selon l'une quelconque des revendications 7 à 12, comprenant en outre une étape de :
g. décapage par projection abrasive de l'anneau (100) de cultitasseur.

14. Procédé selon l'une quelconque des revendications 7 à 13, comprenant en outre une étape de :
h. fixation d'un moyeu central (110') dans l'ouverture centrale (110).

15. Procédé selon la revendication 14, dans lequel la fixation du moyeu central (110) est réalisée par soudage.
